# EUROPEAN PATENT SPECIFICATION

(11) **EP 1 445 447 B1**
(45) Date of publication and mention of the grant of the patent: **28.05.2008**
(21) Application number: 04001034.0
(22) Date of filing: 19.01.2004
(51) Int. Cl.: F02B 61/02, F02F 1/42, F02F 1/24, F02B 75/20, F02F 1/40

(54) **Cylinder head of an internal combustion engine**
Zylinderkopf einer Brennkraftmaschine
Culasse d'un moteur à combustion interne

(30) Priority: 06.02.2003 JP 2003030095
(43) Date of publication of application: 11.08.2004
(73) Proprietor: HONDA MOTOR CO., LTD., Tokyo (JP)
(72) Inventor: Gunji, Toru, 4-1, Chuo 1-chome Wako-shi, Saitama (JP); Sumi, Hiromi, 4-1, Chuo 1-chome Wako-shi, Saitama (JP)
(74) Representative: Liska, Horst

(56) References cited:
- EP-A- 1 143 135
- DE-A- 3 546 436
- PATENT ABSTRACTS OF JAPAN vol. 1997, no. 06, 30 June 1997 (1997-06-30) & JP 9 032633 A (FUJI HEAVY IND LTD), 4 February 1997 (1997-02-04)
- PATENT ABSTRACTS OF JAPAN vol. 0150, no. 35 (M-1074), 28 January 1991 (1991-01-28) & JP 2 275011 A (NISSAN MOTOR CO LTD), 9 November 1990 (1990-11-09)
- PATENT ABSTRACTS OF JAPAN vol. 1998, no. 09, 31 July 1998 (1998-07-31) & JP 10 103053 A (MAZDA MOTOR CORP), 21 April 1998 (1998-04-21)
- PATENT ABSTRACTS OF JAPAN vol. 1995, no. 11, 26 December 1995 (1995-12-26) & JP 7 217494 A (TOYOTA MOTOR CORP), 15 August 1995 (1995-08-15)

## Description

The present invention relates to a cylinder head of a water-cooled multi-cylinder internal combustion engine, and more particularly to the flow of cooling water and the productivity of the cylinder head.

As an internal combustion engines such as reciprocating engines for vehicles or the like, water-cooled internal combustion engines which exhibit high cooling performance have been popularly adopted. Among cylinder heads of these internal combustion engines, the flow of cooling water is positively formed in two cooling water passages formed along a cylinder row direction (see Japanese Patent Publication No. 40218/1989, Japanese Utility Model Publication No. 5081/1990 for example) or a cooling water outlet is formed at the approximately center in the cylinder row direction, a wall which extends in the cylinder row direction and divides the inside of a water jacket into the outlet side and a main water passage side is provided, and cooling water which flows in the water jacket is made to flow into the main water passage from both sides in the cylinder row direction to the outlet side and advances to the cooling water outlet (see Japanese Patent Laid-Open No. 2000-87798). To make the flow of cooling water uniform in this manner is effective for suppressing the occurrence of the temperature gradient in the cylinder row direction of the cylinder head.

Here, the cylinder head is generally a cast product and has the complicated structure for holding a large number of dynamic valve systems and hence, the novel structure which makes the flow of cooling water uniform, enhances the productivity, and enables the reduction of weight has been requested.

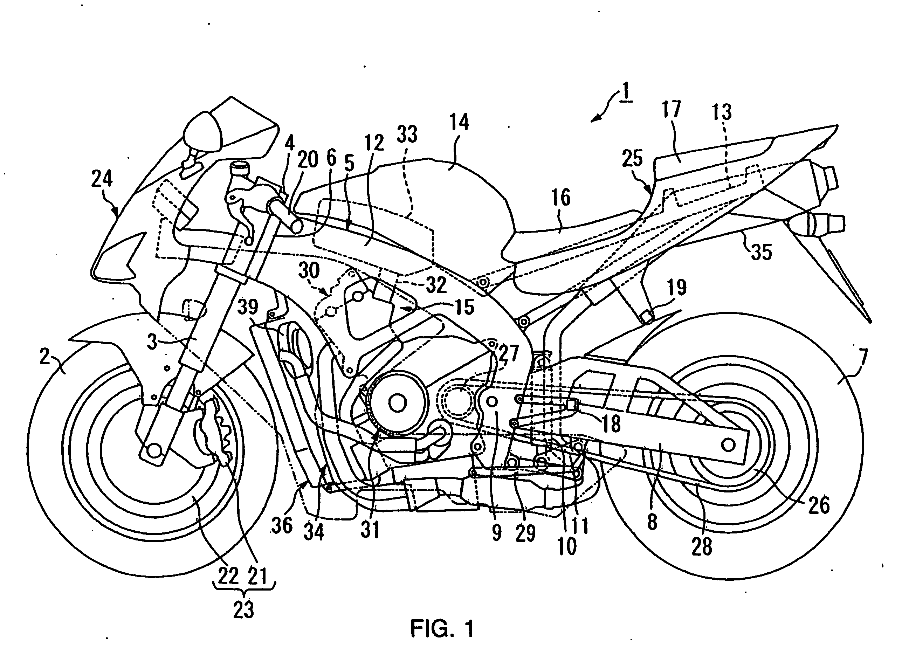

JP 9 032633 A, on which the preamble of claim 1 is based, refers to a horizontal opposed multi-cylinder engine. In Fig. 1 thereof the rib (31) (partition wall) which extends between adjacent plug hole walls (23a, 24a) is not continuously connected therewith, but leaving large air-bleeding/coolant passage holes (35a, 35b) therebetween so that the coolant passes therethrough from the (lower) upstream side of the water jacket to the (upper) downstream side thereof. The upper end of this partition wall is connected to the horizontal wall separating the water jacket from the valve drive chamber (37). The adjacent plug hole walls (23a, 24a) are connected by this horizontal wall. Thus, the coolant flows upwardly through the holes (35a, 35b) from the lower upstream side of the lower partition wall to the upper downstream side thereof, but not along the partition wall in the cylinder row direction, and not around the outer circumference of the plug hole walls.

As means for solving the above-mentioned problem, there is provided a cylinder head of a water-cooled multi-cylinder internal combustion engine, wherein a plurality of plug hole walls which define plug holes are formed in a water jacket of a head body, at the same time, a partition wall which extends between adjacent plug hole walls and partitions in the water jacket into an upstream side and a downstream side, characterized in that the partition wall continuously connects the adjacent plug hole walls with each other as a bridge while directing cooling water which flows at the upstream side of the water jacket along one side of the partition wall in the cylinder row direction around the outer circumference of the plug hole walls to the downstream side of the water jacket along the other side of the partition wall.

According to the above-mentioned cylinder head of the internal combustion engine, the connection wall which is provided between the plug hole walls functions as a partition wall of the water jacket and hence, it is possible to direct cooling water which flows at the upstream side of the water jacket partitioned by the connection wall in the direction from both sides in the cylinder row direction to the downstream side.

Further, by connecting respective plug hole walls using the connection wall, at the time of casting the cylinder head, portions of the connection walls define a molten metal passage around the plug hole walls and hence, the flow of molten metal around the plug hole walls where intake passages, exhaust passages and the like are densely arranged can be improved.

Still further, a mating surface of the cylinder head between respective cylinders and the cylinder block is reinforced by the connection wall which is arranged in the water jacket disposed above the cylinder head and hence, it is possible to reduce the thickness of the periphery of the mating surface.

As has been explained heretofore, according to the invention described in claim 1, it is possible to make cooling water flow from both sides in the cylinder row direction to the downstream side due to the connection walls each of which is formed between the plug hole walls and hence, the flow of cooling water can be easily made uniform in the cylinder row direction whereby the uniform cooling can be performed.

Further, by connecting the respective plug hole walls using the connection walls, the flow of molten metal around the plug hole walls where the intake passages, the exhaust passages and the like are densely arranged is improved whereby it is possible to enhance a yield rate by suppressing the occurrence of casting failure. ,

Still further, since the mating surface of the cylinder head with the cylinder block between the respective cylinders is reinforced by the connection walls, it is possible to reduce the wall thickness around the mating surface whereby the weight of the cylinder head can be reduced.

Preferably, a portion of the partition wall is cut by a sand removing hole, and a gapis formed between a sand removing plug which is mounted in the sand removing hole and the partition wall.

Therefore, it is possible to make cooling water flow from both sides in the cylinder row direction directed to the downstream side due to the partition walls each of which is formed between the plug hole walls and hence, the flow of cooling water can be easily made uniform in the cylinder row direction whereby the uniform cooling can be performed.

Further, by connecting the respective plug hole walls using the partition walls, the flow of molten metal around the plug hole walls where the intake passages, the exhaust passages and the like are densely arranged is improved whereby it is possible to enhance a yield rate by suppressing the occurrence of casting failure.

Still further, since the mating surface of the cylinder head with the cylinder block between the respective cylinders is reinforced by the partition walls, it is possible to reduce the wall thickness around the mating surface whereby the weight of the cylinder head can be reduced.

Further, by providing the gap between the sand removing plug and the partition wall, the occurrence of dwelling or staying of air in cooling water between the plug hole walls can be suppressed and the occurrence of local boiling or the like can be prevented whereby it is possible to maintain the cooling performance in the favorable state.

According to the above-mentioned cylinder head of the internal combustion engine, it is possible to direct cooling water which flows in the upstream side of the water jacket partitioned by the partition wall which is provided between respective plug hole walls in the direction from both sides in the cylinder row direction to the downstream side.

Further, by connecting respective plug hole walls using the partition wall, at the time of casting the cylinder head, portions of the partition walls define a molten metal passage around the plug hole walls and hence, the flow of molten metal around the plug hole walls where intake passages and exhaust passages and the like are densely arranged can be improved.

Still further, a mating surface of the cylinder head between the respective cylinders and the cylinder block is reinforced by the partition wall which is arranged in the water jacket disposed above the cylinder head and hence, it is possible to reduce the thickness of the periphery of the mating surface of the cylinder head.

Further, by forming the sand removing hole which cuts away the portion of the partition wall, after casting, sands can be simultaneously removed from both water passages of the water jacket which are partitioned by the partition wall and, at the same time, by providing the gap between the sand removing plug and the partition wall, stay or dwelling of air in cooling water between respective plug hole walls can be suppressed.
Fig. 1 is a side view of a motorcycle according to an embodiment of the present invention.
Fig. 2 is a side view of a periphery of an engine.
Fig. 3 is a perspective explanatory view of a circulation passage of cooling water.
Fig. 4 is a side explanatory view of a head body.
Fig. 5 is a cross-sectional view taken along a line A-A in Fig. 4.
Fig. 6 is an explanatory view of a head-side water jacket in Fig. 4.
Fig. 7 is a top plan view of a head body according to the second embodiment of the present invention.
Fig. 8 is a cross-sectional view taken along a line B-B in Fig. 7.

The first embodiment for carrying out the present invention is explained hereinafter in conjunction with attached drawings.

As shown in Fig. 1, a front fork 3 which rotatably supports a front wheel 2 of a motorcycle 1 is pivotally supported in a steerable manner on a head pipe 6 provided to a front end portion of a vehicle body frame 5 by way of a steering stem 4. A rear fork 8 which rotatably supports a rear wheel 7 is tiltably and pivotally supported on a pivot portion 9 and an engine body 15 which are mounted on an intermediate portion of the vehicle body frame 5. In the vicinity of a pivot shaft of the rear fork 8, an upper end of a rear cushion 10 which absorbs an impact so as to prevent applying of the impact to a vehicle body by way of the rear wheel 7 and the rear fork 8 is mounted, while a lower end of the rear cushion unit 10 is mounted on a lower portion of the engine body 15 by way of a link mechanism 11.

A main frame 12 of the vehicle body frame 5 is separated in the left and right direction and extends rearwardly and downwardly from an upper portion of the head pipe 6, while rear end portions of the main frame 12 are bent downwardly and are connected to the pivot portion 9. To a rear portion of the main frame 12, a seat frame 13 of the vehicle body frame 5 is connected. A fuel tank 14 is arranged above the main frame 12, while an engine body 15 of a water-cooled parallel four cylinder engine (internal combustion engine) according to the present invention is arranged below the main frame 12.

Behind a rear portion of the fuel tank 14, a driver seat 16 and a rear pillion seat 17 are respectively supported on the seat frame 13. Further, a drivers step 18 is mounted on the main frame 12 behind the pivot portion 9, while a rear occupant step 19 is mounted on a lower portion of the seat frame 13. Further, a pair of left and right handles 20 is mounted on an upper end portion of the front fork 3.

A brake caliper 21 is mounted on a lower end portion of the front fork 3 and a brake rotor 22 corresponding to a brake caliper 21 is mounted on the front wheel 2 thus constituting a front brake device 23. Here, at the right side of the rear wheel 7, a rear brake device (not shown in the drawing) having the constitution substantially equal to the constitution of the front brake device 23 for the front wheel 2 is provided.

A front portion of the body of the motorcycle 1 is covered with a front cowl 24, while a periphery of the seat frame 13 is covered with a rear cowl 25. A rear sprocket wheel 26 is mounted on the left side of the rear wheel 7 and a drive chain 28 is wound around a rear sprocket wheel 26 and a drive sprocket wheel 27 arranged at the left side of a rear portion of the engine body 15 and hence, a drive force of the engine can be transmitted to the rear wheel 7. A side stand 29 which is storable is arranged at a lower portion of the left side of the vehicle body frame 5 and is capable of supporting the motorcycle 1 in an erected state in which the vehicle body is inclined to the left side.

A cylinder body 30 of the engine body 15 is arranged above a crankcase 31 in a slightly frontwardly inclined manner. Throttle bodies 32 which correspond to respective cylinders are connected to a rear portion of the cylinder body 30 and respective throttle bodies 32 are connected to an air cleaner casing 33 which is arranged between the main frame 12 and the fuel tank 14. Further, to a front portion of the cylinder body 30, exhaust pipes 34 corresponding to respective cylinders are connected. The exhaust pipes 34 are bent downwardly from the front wall of the cylinder body 30, pass below the crankcase 31 and, thereafter, are bent upwardly behind the pivot portion 9, and are connected to a silencer 35 which is supported on the seat frame 13.

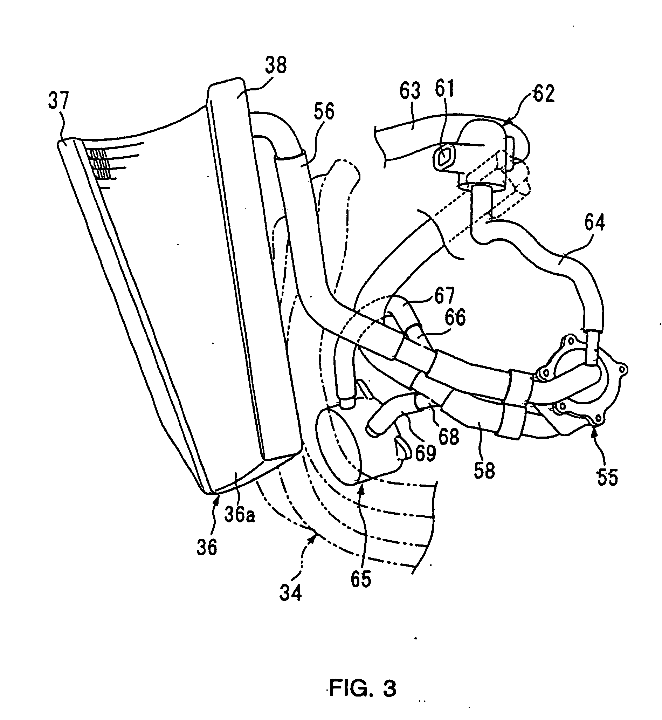

In front of the exhaust pipes 34, a radiator 36 is arranged in a slightly forwardly inclined posture in the same manner as the cylinder body 30. The radiator 36 is of a round type which has a front face side thereof curved in a concave shape and, at the same time, as shown in Fig. 3, the radiator 36 is of a cross-flow type which provides a cooling-water inflow -side tank 37 to a right side of a radiator core 36a and a cooling-water outflow-side tank 38 to a left side of the radiator core 36a. The radiator 36 is formed in the vertical direction to extend from an upper portion of the cylinder body 30 to a lower portion of the crank casing 31. A pair of left and right radiator fans 39 is mounted on a back surface side of an upper portion of the radiator core 36a.

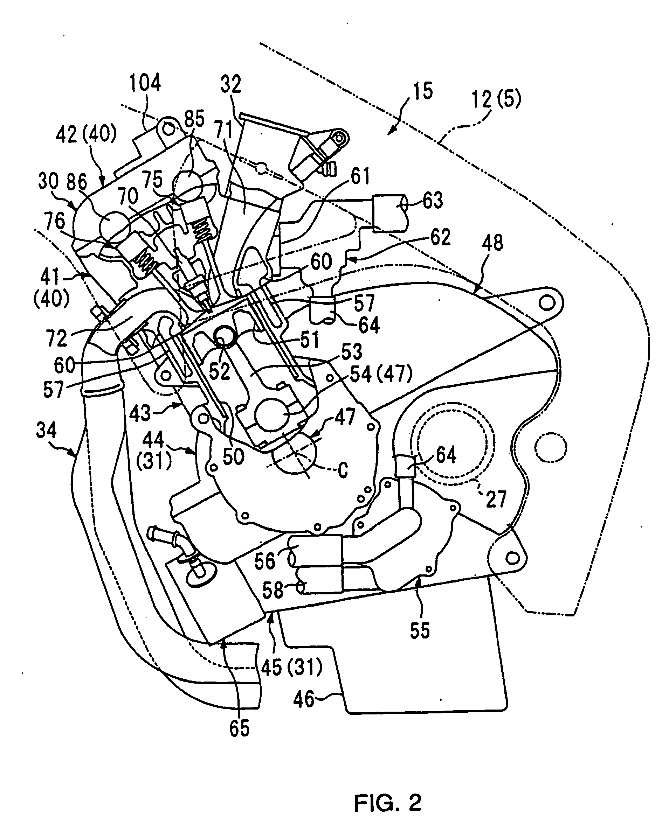

To further explain the embodiment also in conjunction with Fig. 2, the engine body 15 is provided with cylinder heads 40, cylinder blocks 43 and a crankcase 31 which constitute essential parts of the cylinder body 30. The cylinder head 40 is configured to be divided into a head body 41 and a head cover 42, while the crankcase 31 is configured to be divided into an upper case 44 and a lower case 45. The upper case 44 and the cylinder block 43 are integrally molded and an oil pan 46 is mounted below the lower case 45. Here, the head body 41 is a cast product made of an aluminum alloy.

In the inside of the crankcase 31, a crankshaft 47 having an axis C parallel to the vehicle body width direction is arranged. Further, a transmission case 48 is contiguously formed behind the crankcase 31 and a transmission and a crutch mechanism (both being omitted from the drawing) are respectively arranged in the inside of the transmission case 48. Four cylinders 50 are formed in the cylinder block 43 such that these cylinders 50 are arranged in the vehicle body width direction. A piston 51 is slidably fitted into the inside of each cylinder 50. A connecting rod 53 is rotatably connected to each piston 51 by way of a piston pin 52 and, at the same time, a large end portion of the connecting rod 53 is rotatably connected to the crankpin 54 of the crankshaft 47, whereby the reciprocating motion of the piston 51 is converted into the rotary motion about the axis C.

To explain also in conjunction with Fig. 3, a water pump 55 which is operated along with the rotation of the crankshaft 47 is arranged at the left side of the lower case 45. To the water pump 55, an outflow-side radiator hose 56 which is communicated with the outflow-side tank 38 of the radiator 36 and a cooling water introduction hose 58 which is communicated with the cylinder-side water jacket 57 of the cylinder block 43 are connected. A cooling water inlet (not shown in the drawing) to the cylinder-side water jacket 57 is provided to a lower portion of the left side of the cylinder block 43, wherein cooling water which flows into the cylinder-side water jacket 57 from the cooling water inlet passes through the cylinder-side water jacket 57 and, thereafter, cooling water flows into a head-side water jacket 60 of the cylinder head 40.

A cooling water outlet 61 from the head-side water jacket 60 is provided behind the cylinder head 40 and a thermostat 62 is directly mounted on the cooling water outlet 61. An inflow-side radiator hose 63 which is communicated with the inflow-side tank 37 of the radiator 36 is connected to a cooling water outlet of the thermostat 62 and, at the same time, a bypass hose 64 is arranged between the thermostat 62 and the water pump 55.

Then, when the water pump 55 is operated along with the rotation of the crankshaft 47, cooling water which is taken out from the outflow-side tank 38 of the radiator 36 through the outflow-side radiator holes 56 is introduced into the inside of the cylinder-side water jacket 57 through a cooling water introduction hose 58. Cooling water which passes through the cylinder-side water jacket 57 is introduced into the head-side water jacket 60 and, thereafter, is taken out from the cooling water outlet 61 and is introduced into the inlet-side tank 37 of the radiator 36 through the thermostat 62 and the inflow-side radiator hose 63. Cooling water passes through the radiator core 36a so as to perform the radiation of heat and returns to the inflow-side tank 37. Then, the cooling water repeatedly circulates the above-mentioned passages.

In the above-mentioned circulation, when the temperature of cooling water which passes through the thermostat 62 becomes equal to or less than a fixed temperature, cooling water is supplied to the water pump 55 from the thermostat 62 through the bypass hose 64 and is circulated through the radiator 36. Further, when the temperature of cooling water which passes through the thermostat 62 becomes equal to or more than a fixed temperature, the radiator fan 39 is operated so as to forcibly cool cooling water.

Further, a water-cooling type oil cooler 65 which cools an engine oil served for lubricating respective parts of the engine is mounted on a front portion of the lower case 45. Cooling water is introduced into the oil cooler 65 from a branch pipe 66 which is provided to a midst portion of the cooling water introducing hose 58 and an introduction hose 67 and, at the same time, cooling water taken out from the oil cooler 65 is returned to the water pump 55 by way of a branch pipe 68 and a take-out hose 69 provided to a midst portion of the outflow-side radiator hose 56.

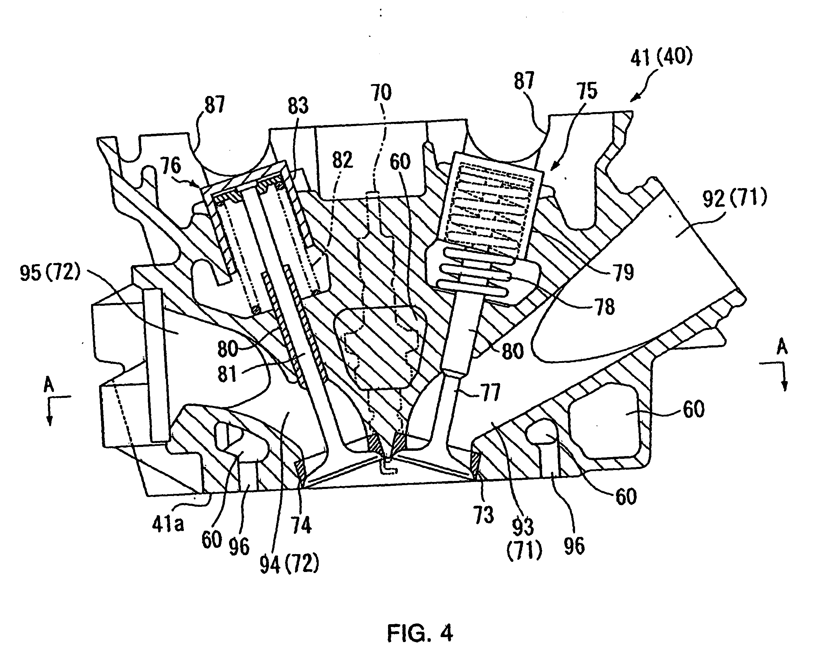

To explain the embodiment also in conjunction with Fig. 4, ignition plugs 70 are threadedly mounted on the head body 41 of the cylinder head 40 such that the ignition plugs 70 face the inside of the respective combustion chambers and, at the same time, an intake port 71 and an exhaust port 72 which make each combustion chamber communicate with the outside are respectively formed in the head body 41 of the cylinder head 40. The throttle body 32 is connected to an outside opening of each intake port 71 and an exhaust pipe 34 is connected to an outside opening of each exhaust port 72. Further, to combustion-chamber-side openings of each intake port 71 and each exhaust port 72, valve seats 73, 74 are respectively mounted and these openings can be opened or closed in response to the operations of an intake valve 75 and an exhaust valve 76.

The intake valve 75 is constituted of a valve stem 77which has an umbrella-shaped valve body which actually opens and closes the opening of the intake port 71, a valve spring 78 which biases the valve stem 77 upwardly so as to bring a face surface of a valve element into pressure contact with the valve seat 73, a cylindrical valve lifter 79 which is mounted on an upper end of the valve stem 77 and the like, wherein the valve stem 77 is slidably inserted into a valve guide 80 which is mounted on the head body 41. Further, the exhaust valve 76 has the substantially same constitution as the intake valve 75. That is, the exhaust valve 76 is constituted of a valve stem 81, a valve spring 82, a valve lifter 83 and the like.

Above each intake valve 75 and the exhaust valve 76, an intake-side cam shaft 85 and an exhaust-side cam shaft 86 which operate these valves 75, 76 are arranged in parallel to the axis C of the crankshaft 47. On peripheral surfaces of the intake-side cam shaft 85 and the exhaust-side cam shaft 86, an intake-side cam and an exhaust-side cam which correspond to each intake valve 75 and the exhaust valve 76 are formed. Further, these cam shafts 85, 86 are rotatably supported by bearings 87 of the head body 41 and a bearing cap not shown in the drawings.

Respective cam shafts 85, 86 have a hollow structure,
wherein hollow portions constitute passages for an engine oil and the engine oil is supplied to respective slide surfaces from given oil holes. Further, cam sprocket wheels not shown in the drawings are respectively formed on right ends of the respective cam shafts 85, 86 and the respective cam shafts 85, 86 are interlocked with the crankshaft 47 by way of cam chains wound around these cam sprocket wheels. Due to such a constitution, along with the rotation of the crankshaft 47, the respective cam shafts 85, 86 are rotated so as to operate the intake valve 75 and the exhaust valve 76.

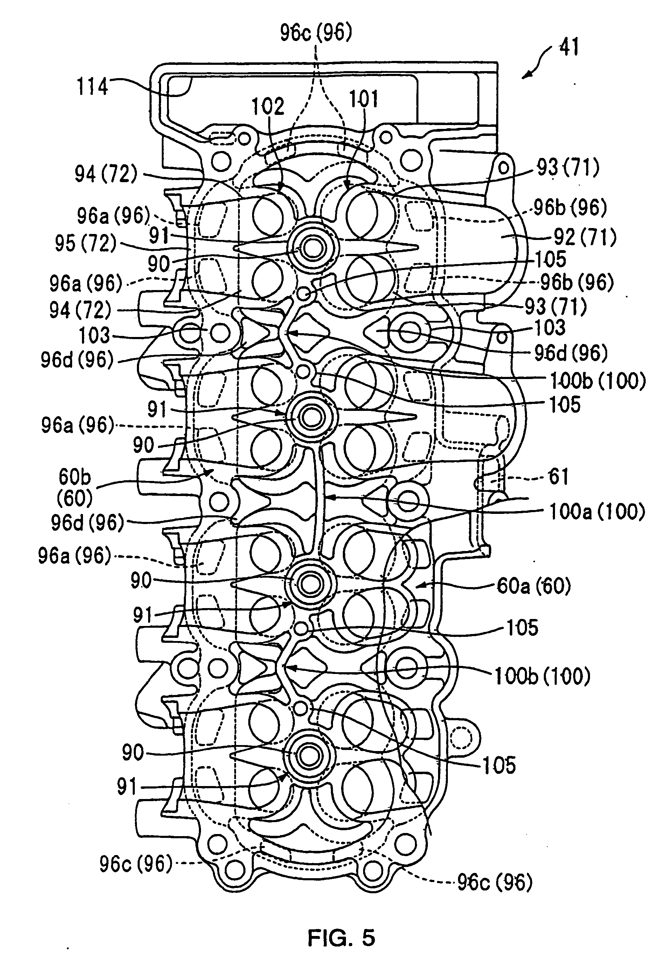

To explain the embodiment also in conjunction with Fig. 5, plug holes 90 which correspond to four cylinders 50 arranged in the vehicle body width direction are formed in the head body 41, wherein the ignition plug 70 can be threadedly mounted on the vicinity of the centers of ceiling portions of the combustion chambers.

The suction port 71 is formed corresponding to one combustion chamber such that branch passages 93 are formed by bifurcating a main intake passage 92 which opens to the outside, wherein respective branch passages 93 respectively open at the combustion chambers. These two openings are arranged behind the plug hole 90 and, at the same time, the valve seats 73 are mounted on the respective openings. Further, with respect to openings to the combustion chamber of the exhaust port 72, two openings are also formed for one combustion chamber. These two openings are arranged in front of the plug hole 90 and, at the same time, the valve seats 74 are mounted on the respective openings. That is, two branch passages 94 of the exhaust ports 72 are communicated with the combustion chamber and these branch passages 94 are merged to form a main exhaust passage 95.

In a mating surface 41a of the head body 41 with the cylinder block 43, a plurality of communication openings 96 which are communicable with a cylinder-side water jacket 57 and a head-side water jacket 60 are formed. To be more specific, front communication openings 96a are respectively formed in the mating surface 41a in front of each exhaust port 72 and each front communication opening 96a is formed in an approximately rectangular shape along a front surface of the head body 41. In the same manner, rear communication openings 96b are respectively formed in the mating surface 41a behind the opening of each intake port 71 and each rear communication opening 96b is formed in an approximately rectangular shape along a rear surface of the head body 41.

Further, assuming respective cylinders 50 as the first cylinder, the second cylinder, ... in order from the left side, on the mating surface 41a, at the outside of the openings of the exhaust ports 72 and the openings of the intake ports 71 of the first cylinder and the fourth cylinder in the cylinder row direction, side communication openings 96c which are formed in an elongated circular shape along side surfaces of the head body 41 are respectively formed. Further, between respective cylinders 50, a pair of front and rear intermediate communication openings 96d having an approximately triangular shape are respectively formed.

The inflow of cooling water into the head-side water jacket 60 is controlled by through holes formed in a head gasket which is interposed between the head body 41 and the cylinder block 43. That is, by adjusting a shape, a position, and an area of the through holes formed in the head gasket thus arbitrarily stopping or throttling the inflow of cooling water into the respective communication openings 96, it is possible to control a flow rate balance or the like of cooling water in the head-side water jacket 60 which is relatively arranged in a complicated manner in the inside of the head body 41. Then, according to this embodiment, among the various communication openings 96, cooling water is made to flow into the inside of the head-side water jacket 60 mainly through the intermediate communication opening 96d disposed between the second cylinder and the third cylinder and at the front-side (exhaust port 72 side) and through the front communication openings 96a positioned at both sides of the intermediate communication opening 96d.

On the head body 41, cylindrical plug hole walls 91 which define the plug holes 90, intake port walls 101 and exhaust port walls 102 having a branch pipe shape which form the intake ports 71 and the exhaust ports 72, bosses 103 which join the head body 41 and the cylinder block 43 and the like are formed. Portions of the intake port walls 101 and the exhaust port walls 102 in the vicinity of the valve seats 73, 74 are densely arranged in the peripheries of the plug hole walls 91 and are integrally formed such that the portions in the vicinity of these respective walls merge to each other. The head-side water jacket 60 is arranged in the inside of the head body 41 while avoiding the plug hole walls 91, the intake port walls 101, the exhaust port walls 102, the bosses 103 and the like. That is, the portions of the respective walls are arranged in the inside of the head-side water jacket 60.

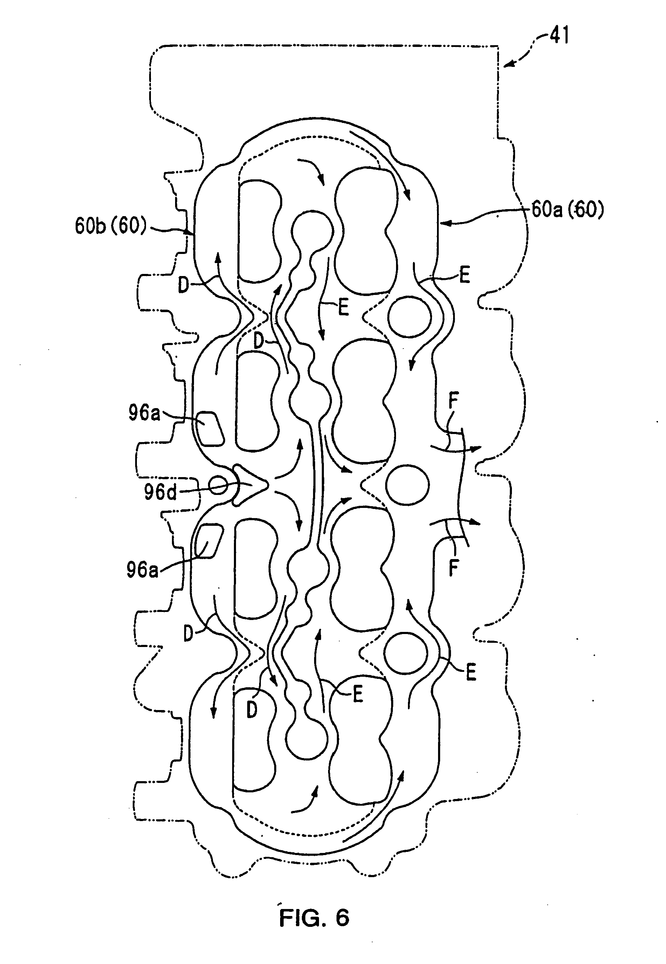

Inside the head-side water jacket 60 and between the neighboring plug hole walls 91, a partition wall (a connection wall) 100 is provided such that the partition wall 100 functions as a bridge to connect these walls. Each partition wall 100 is formed in an erected manner extending from an upper surface to a lower surface of the head-side water jacket 60 and substantially parallel to the cylinder axis and is integrally formed with the head body 41. Due to such partition walls 100, a water passage of the head-side water jacket 60 is separated into an intake-port-side water passage 60a and an exhaust-port-side water passage 60b between the plug hole wall 91 for the first cylinder and the plug hole wall 91 for the fourth cylinder (see Fig. 6).

To explain the embodiment also in conjunction with Fig. 6, cooling water which flows into the inside of the head-side water jacket 60 from the intermediate communication opening 96d and the front-side communication openings 96a formed at the left and right sides of the intermediate communication opening 96d passes above and below the exhaust port walls 102 of respective cylinders 50 and, at the same time, flows toward the outside in the cylinder row direction (an arrow D in the drawing) while cooling the front portions of the plug holes 90 and the peripheries of the valve seats 74 of the exhaust ports 72. Cooling water which reaches the outside of the first cylinder and the fourth cylinder is transferred from the exhaust-port-side water passage 60b to the intake-port-side water passage 60a. Then, cooling water passes above and below the intake port walls 101 and, at the same time, flows toward the inside in the cylinder row direction while cooling the rear portions of the plug holes 90 and the peripheries of the valve seats 73 of the intake ports 71 (an arrow E in the drawing). Then, cooling water flows out to the outside of the head-side water jacket 60 from a cooling water outlet 61 formed between and behind the second cylinder and the third cylinder (an arrow direction F in the drawing) and is supplied to the thermostat 62 which is directly mounted in the cooling water outlet 61.

The partition wall 100a formed between the second cylinder and the third cylinder is formed in an arcuate shape slightly projecting toward the intake port 71 side in view of the relationship with a flow pattern of cooling water. Further, the partition walls 100b which are formed between the first cylinder and the second cylinder as well as between the third cylinder and the fourth cylinder are formed in a V-shape projecting toward the exhaust port 72 side thus preventing the generation of a vortex of cooling water or the like in the exhaust-port-side water passage 60b which is the upstream side of the head-side water jacket 60 and exhibits a relatively fast flow speed (see Fig. 5). Here, bosses 105 for bolts which are used for fixing a breather chamber 104 (see Fig. 2) formed above the head cover 42 are formed on both end portions of the partition wall 100b.

Further, an air bleeding hole for preventing dwelling of air (not shown in the drawings) is formed in an upper portion of each partition wall 100. That is, the air bleeding hole suppresses the dwelling of air in the periphery of the partition wall 100 where the diameter of flow largely changes compared to the periphery of the plug hole wall 91. Further, since a portion of cooling water flows into the intake-port-side water passage 60a from the exhaust-port-side water passage 60a through the air bleeding hole and hence, the occurrence of the dwelling of cooling water around the periphery of the partition wall 100 can be effectively prevented. Here, a flow rate of cooling water which flows into the intake-port-side water passage 60a through the air bleeding hole is sufficiently small compared to a flow rate of cooling water which flows into the intake-port-side water passage 60a from the outside of the first cylinder and the fourth cylinder and hence, the flow of cooling water in the inside of the head-side water jacket 60 shown in Fig. 6 can be maintained.

According to the above-mentioned first embodiment, by providing the partition wall 100 which connects the plug hole walls 91 to each other in the inside of the head-side water jacket 60, the head-side water jacket 60 is separated into the intake-port-side water passage 60a and the exhaust-port-side water passage 60b. Accordingly, cooling water which flows into the inside of the head-side water jacket 60 passes through the exhaust-port-side water passage 60b and, thereafter, is folded back at the outside in the cylinder row direction of the first cylinder and the fourth cylinder. Then, cooling water passes through the intake-port-side water passage 60a, is merged at one position in the cooling water outlet 61 which is provided at the approximately center in the cylinder row direction, and flows out to the outside of the head-side water jacket 60.

Accordingly, cooling water uniformly flows in the inside of the head-side water jacket 60 to both outer sides in the cylinder row direction and hence, the generation of the temperature gradient in the cylinder row direction can be suppressed whereby it is possible to uniformly cool the cylinder head 40.

Further, cooling water which flows into the inside of the head-side water jacket 60 can be merged at one position in the cooling water outlet 61 provided at the approximately center in the cylinder row direction and, thereafter, can be taken out to the outside and hence, the cooling water piping outside the cylinder head 40 can be arranged simply and neatly.

Still further, by providing the air bleeding hole in each partition wall 100, the occurrence of the staying or dwelling of air in the periphery of the partition wall 100 can be effectively prevented whereby the cooling performance of the cylinder head 40 can be held in a favorable state.

Further, since the respective plug hole walls 91 are connected by the partition walls 100, at the time of producing the head body 41 by casting, the partition wall 100 portion functions as a molten metal passage around the plug hole walls 91. Although the periphery of the plug hole wall 91 of the head body 41 is in the state that the intake port wall 101, the exhaust port wall 102 and the like are densely arranged therein, by adding the molten metal passage to such a portion, the flow of molten metal is enhanced whereby the quality of cast product can be enhanced and a yielding rate of the cast products can be also enhanced.

Still further, it is possible to reinforce the portion of the head body 41 between the respective cylinders 50 by the partition walls 100 formed in the inside of the head-side water jacket 60 above the portion. The portion of the head body 41 between the respective cylinders 50 seals the combustion chamber and hence, the portion requires a given strength and rigidity. By reinforcing the portion with the partition wall 100, it is possible to reduce a wall thickness of the head body 41 and hence, the weight of the head body 41 can be also reduced.

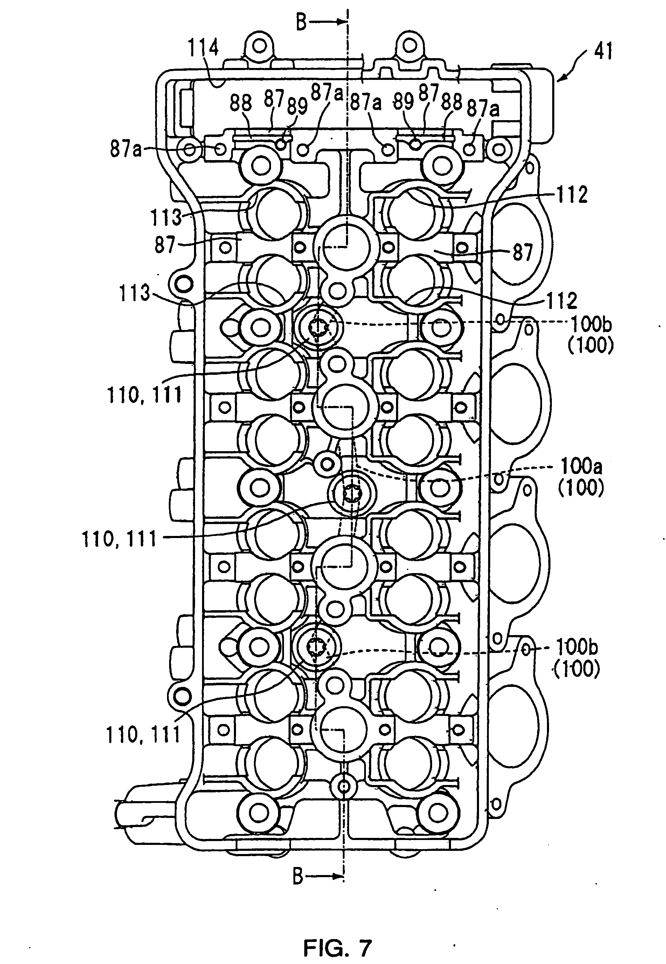

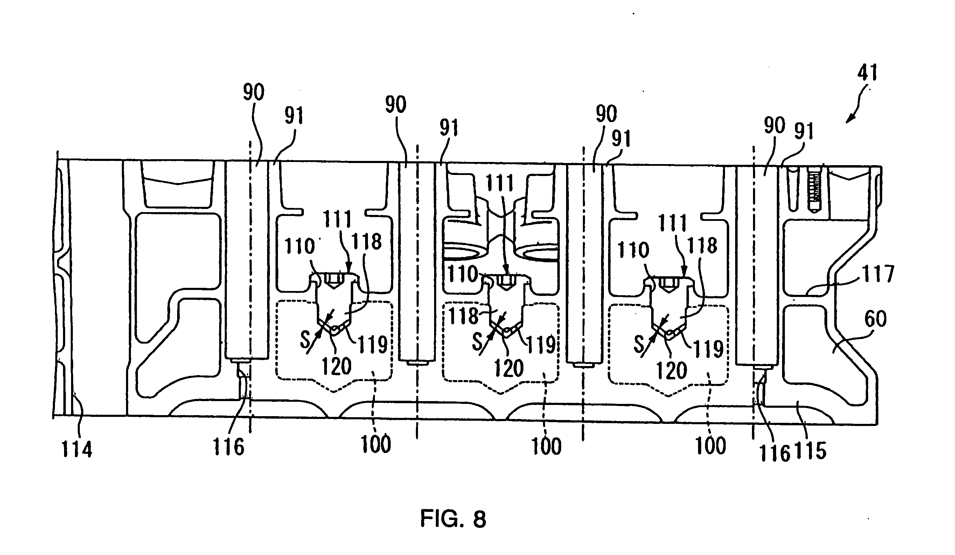

Next, the second embodiment of the present invention is explained based on Fig. 7 and Fig. 8 also using Fig. 1 to Fig. 6.

This embodiment differs from the first embodiment with respect to a point that in place of the air bleeding hole formed in each partition wall 100, a sand-removing-hole plug (sand removing plug) 111 for plugging a sand removing hole 110 which is necessary at the time of casting is provided above each partition wall 100 and, at the same time, a gap S is defined between an upper periphery of each partition wall 100 and a distal end of the plug 111. Here, parts identical with the parts of the first embodiment are given same symbols and their explanation is omitted.

As shown in Fig. 7, in front of and behind four plug hole walls 91 corresponding to respective cylinders 50, each pair of guide walls 112, 113 which slidably support the valve lifters 79, 83 of the intake valve 75 and the exhaust valve 76 are provided. Between each pair of the guide walls 112, 113 and between respective rightmost guide walls 112, 113 and a cam chain case 114, bearings 87 which rotatably support journal portions of the intake-side cam shaft 85 and the exhaust-side cam shaft 86 are respectively provided. In slide surfaces of the bearings 87 which are provided between the respective rightmost guide walls 112, 113 and the cam chain case 114, oil grooves 88 and oil passages 89 which open in the inside of the oil grooves 88 are formed. Due to such a constitution, an engine oil supplied through the oil passages 89 is supplied to respective slide surfaces by way of the oil grooves 88 and the hollow portions of the respective cam shafts 85, 86. In front of and behind respective bearings 87, bolt holes 87a for fixing a bearing cap are respectively formed.

To explain this embodiment also in conjunction with Fig. 8, in a bottom wall 115 of the head body 41 which forms a ceiling portion of each combustion chamber, a thread hole 116 in which the ignition plug 70 inserted into the plug hole 90 is threadedly mounted is formed. Further, an upper partition wall 117 is provided above the bottom wall 115 and a space which is sandwiched and closed by the upper partition wall 117 and the bottom wall 115 defines the head-side water jacket 60. Each partition wall 100 is formed in an erected manner from an upper surface of the bottom wall 115 to a lower surface of the upper partition wall 117 so as to separate the head-side water jacket 60 between the neighboring plug hole walls 91.

Here, with respect to the head body 41 which is a cast product, the head-side water jacket 60 is formed by setting a core produced by solidifying exclusive-use sands in the inside of a mold, by crushing the core after casting, and by pulling out the crushed sands to the outside. To enable such an operation, a proper number of the sand removing holes 110 are respectively formed in the upper partition wall 117 which is disposed above the respective partition walls 100. Portions of upper peripheral portions of the partition walls 100 are cut away to form these respective sand removing holes 110 and hence, the head-side water jacket 60 opens to the outside whereby the sands can be removed. Then, after removing the sands, the plugs 111 are threadedly engaged with the sand removing holes so as to plug the sand removing holes whereby it is possible to make cooling water flow into the inside of the head-side water jacket 60.

A pilot portion 118 having a diameter which exceeds a thickness of the partition wall 100 is formed on a distal end portion of each plug 111. A distal end of the pilot portion 118 is formed in a flat conical shape. An alignment portion 120 having a funnel or concave shape corresponding to a conical portion 119 is formed in the cut-away portion of each partition wall 100. Here, the distal end portion of the plug 111 is set such that, in a state that the plug 111 is threadedly engaged in the sand removing hole 110, a gap S is formed between the conical portion 119 and the alignment portion 120 and a portion of cooling water in the inside of the exhaust-port-side water passage 60b can flow into the intake-port-side water passage 60a through the gap S. The gap S substantially functions in the same manner as the air bleeding hole of the first embodiment whereby the occurrence of air dwelling in the periphery of the partition wall 100 can be prevented and, at the same time, the occurrence of dwelling of cooling water can be also prevented.

According to the above-mentioned second embodiment, in the same manner as the first embodiment, it is possible to uniformly cool the cylinder head 40, to make the cooling water piping outside the cylinder head 40 simple and neat, to improve the productivity of the head body 41, and to reduce the weight of the head body 41. Further, by providing the sand removing hole 110 which cuts away the portion of each partition wall 100, after casting the head body 41, sands can be removed simultaneously from the intake-port-side water passage 60a and the exhaust-port-side water passage 60b of the head-side water jacket 60. Still further, by forming the gap S between the sand-removing-hole plug 111 and the partition wall 100, the dwelling of air, the local boiling or the like around the periphery of the partition wall 100 where the diameter of cooling water flow largely changes can be surely prevented whereby it is possible to maintain the head-side water jacket 60 in a state that the favorable cooling performance can be achieved.

Here, the present invention is not limited to the above-mentioned embodiments and the present invention is applicable to a parallel four cylinder type internal combustion engine provided that the engine includes a plurality of cylinders. Further, the present invention is not limited to the motorcycle. That is, not mention a three-wheeled vehicle and a four-wheeled vehicle, the present invention is also applicable to the whole multi-cylinder water-cooled type internal combustion engines.

The invention provides a cylinder head of an internal combustion engine which can enhance the productivity while ensuring a favorable flow of cooling water and can reduce the weight thereof.

To achieve this, a plurality of plug hole walls 91 which form plug holes 90 in the inside of a head-side water jacket 60 of a head body 41 are provided and, at the same time, partition walls 100 which connect the plug hole walls 91 with each other are formed in the inside of the head-side water jacket 60.

## Claims

1. A cylinder head of a water-cooled multi-cylinder internal combustion engine, wherein a plurality of plug hole walls (91) which define plug holes (90) are formed in a water jacket (60) of a head body (41) and, at the same time, a partition wall (100) which extends between adjacent plug hole walls (91) and partitions in the water jacket (60) into an upstream side (60b) and a downstream side (60a),
**characterized in that**
the partition wall (100) continuously connects the adjacent plug hole walls (91) with each other as a bridge while directing cooling water which flows at the upstream side (60b) of the water jacket (60) along one side of the partition wall (100) in the cylinder row direction around the outer circumference of the plug hole walls (91) to the downstream side (60a) of the water jacket (60) along the other side of the partition wall (100).

2. A cylinder head of a water cooled multi-cylinder internal combustion engine according to claim 1, **characterized in that** a portion of the partition wall (100) is cut by a sand removing hole (110), and a gap (5) is formed between a sand removing plug (111) which is mounted in the sand removing hole (110) and the partition wall (100).

## Patentansprüche

1. Zylinderkopf einer wassergekühlten Mehrzylinderbrennkraftmaschine, worin eine Mehrzahl von Kerzenlochwänden (91), die Kerzenlöcher (90) definieren, in einem Wassermantel (60) eines Kopfkörpers (41), und gleichzeitig eine Trennwand (100), die sich zwischen benachbarten Kerzenlochwänden (91) erstreckt und den Wassermantel (60) in eine stromaufwärtige Seite (60b) und eine stromabwärtige Seite (60a) unterteilt, ausgebildet sind,
**dadurch gekennzeichnet, dass** die Trennwand (100) die benachbarten Kerzenlochwände (91) als Brücke durchgehend miteinander verbindet, während sie Kühlwasser, das an der stromaufwärtigen Seite (60b) des Wassermantels (60) fließt, entlang einer Seite der Trennwand (100) in der Zylinderreihenrichtung um den Außenumfang der Kerzenlochwände (91) zur stromabwärtigen Seite (60a) des Wassermantels (60) entlang der anderen Seite der Trennwand (100) leitet.

2. Zylinderkopf einer wassergekühlten Mehrzylinderbrennkraftmaschine nach Anspruch 1, **dadurch gekennzeichnet, dass** ein Abschnitt der Trennwand (100) durch ein Sandbeseitigungsloch (110) aufgeschnitten ist und zwischen einem Sandbeseitigungsstopfen (111), der in dem Sandbeseitigungsloch (110) angebracht ist, und der Trennwand (100) eine Lücke (5) gebildet ist.

## Revendications

1. Culasse d'un moteur à combustion interne multicylindre refroidi par eau, dans laquelle une pluralité de parois de trous de bouchon (91) qui définissent des trous de bouchon (90) est formée dans une chemise d'eau (60) d'un corps de culasse (41) et, simultanément, une paroi de séparation (100) qui s'étend entre des parois de trous de bouchon (91) adjacentes et divise la chemise d'eau (60) en un côté amont (60b) et un côté aval (60a),
**caractérisée en ce que**
la paroi de séparation (100) relie de manière continue les parois de trous de bouchon (91) adjacentes les unes aux autres comme un pont tout en dirigeant l'eau de refroidissement qui circule du côté amont (60b) de la chemise d'eau (60) le long d'un côté de la paroi de séparation (100) dans la direction de rangée des cylindres autour de la circonférence extérieure des parois de trous de bouchon (91) vers le côté aval (60a) de la chemise d'eau (60) le long de l'autre côté de la paroi de séparation (100).

2. Culasse d'un moteur à combustion interne multicylindre refroidi par eau selon la revendication 1, **caractérisée en ce qu'**une partie de la paroi de séparation (100) est coupée par un trou d'extraction de sable (110), et un espace (5) est formé entre un bouchon d'extraction de sable (111) qui est monté dans le trou d'extraction de sable (110) et la paroi de séparation (100).
